# EUROPEAN PATENT APPLICATION

(11) **EP 3 862 183 A1**
(43) Date of publication of application: **11.08.2021**
(21) Application number: 20209970.1
(22) Date of filing: 09.01.2015
(51) Int. Cl.: B32B 27/22, B32B 27/30, C08K 5/00, C08K 5/101, C08L 27/06, E04F 13/07, C08L 97/00

(54) **FLOOR TILE WITH A BIO-BASED PLASTICIZER**

(30) Priority: 09.01.2014 US 201461925425 P
(62) Divisional of application: 15702865.5
(71) Applicant: Novalis Holdings Limited, Wanchai (CN)
(72) Inventor: LI, Deng-Ming, Zhenjiang Jiangsu 212003 (CN); CHEN, Hao Allen, Asburn VA 20147 (US); NI, Qinglan, Zhenjiang Jiangsu (CN)
(74) Representative: Grünecker Patent- und Rechtsanwälte PartG mbB

(57) **Abstract**

A surface covering is provided. The surface covering is made of a composition of a polymer a bio-based plasticizcr, a stabilizer, and a co-stabilizer.

## Description

### CROSS-REFERENCE TO RELATED APPLICATIONS

This application claims the benefit of the filing date under 35 U.S.C. § 119(a)-(d) of United States Provisional Patent Application No. 61/925,425, filed January 9, 2014.

### FIELD OF THE INVENTION

The invention generally relates to a surface covering and, more specifically, to a surface covering composition having a bio-based plasticizer.

### BACKGROUND

Luxury vinyl tiles ("LVT") having polyvinyl chloride ("PVC") as a main component are generally well known. The manufacture of LVT from PVC commonly requires the use of a plasticizer. Phthalate esters are the most widely used plasticizers in PVC products, because the addition of phthalates to PVC makes the brittle plastic become more flexible and durable. It is common for PVC products to contain up to 20 percent by weight of phthalate plasticizers.

One drawback to using phthalate esters is that many have been identified as reproductive and developmental toxins. The phthalates are not chemically bound to the PVC, so over time the phthalates can leach out of PVC-based products. Health concerns have resulted in a number of common phthalate esters being restricted or banned in the United States and the European Union.

Another drawback to using phthalate esters is that they are derived from non-renewable petroleum sources. There is a growing demand from both Regulatory Agencies and consumers for greener products made from bio-based, renewable resources.

The ASTM-D6866 standard is the Standard Test Methods for Determining the Biobased Content of Solid, Liquid, and Gaseous Samples Using Radiocarbon Analysis. ASTM-D6866 distinguishes carbon resulting from contemporary bio-based materials verses those derived from fossil-based materials. Bio-based materials contain a known quantity of carbon 14 (modern carbon) that is distinguishable from the carbon 14 content of fossil-based materials. Generally bio-based materials have high carbon 14 content, whereas fossil-based materials have low carbon 14 content. The % of bio-based content is a measurement of a product's ¹⁴C/¹²C content determined relative to the modern carbon-based oxalic acid radiocarbon Standard Reference Material (SRM) 4990c.

Accordingly, there is a need for a polymer surface covering, such as LVT, which replaces phthalate ester plasticizers with bio-based, renewable plasticizers.

### SUMMARY

Accordingly, the present invention was devised in light of the problems described above, to provide a surface covering having a bio-based plasticizer. The surface covering is made of a composition of a polymer a bio-based plasticizer, a stabilizer, and a co-stabilizer.

### DETAILED DESCRIPTION OF THE EMBODIMENT(S)

A surface covering relating to floor coverings, wallpapers, or other surface coverings having a homogeneous, single layer, or a heterogeneous, multiple layer construction will now be discussed. Exemplary embodiments of the floor covering include Luxury Vinyl Tiles and Planks ("LVT") as well as sheet flooring. However, one of ordinary skill in the art would appreciate that the surface covering may also include other types of coverings, such as carpet backing, wall coverings, semi-rigid extrusion sheet, vinyl underlayment, and resilient hard surface flooring such as vinyl composition tile, Inlaid product as well as cushion flooring.

The surface covering includes an exemplary composition having a polymer, a bio-based plasticizer, a stabilizer, and a co-stabilizer. Further embodiments may include co-polymers, lubricants, fillers, pigments, or combinations thereof. The amounts of the composition components are expressed as parts per hundred on the weight of the polymer ("phr").

An exemplary embodiment of the surface covering composition has a total bio-based content of 1-35%, as defined by ASTM-D6866. In another exemplary embodiment, the surface covering composition may have a total bio-based content of 15-35%, as defined by ASTM-D6866. In yet another exemplary embodiment, the surface covering composition may have a total bio-based content of 20-30%, as defined by ASTM-D6866.

In an exemplary embodiment, the polymer is a halogen-containing polymer, such as polyvinyl chloride and polyvinylidene chloride.

PVC resin is a major component in LVT formulations. PVC resin used for producing LVT by the calendaring or extrusion process may be a suspension grade PVC with a molecular weight having a K value from 59 to 74, which corresponds to an inherent viscosity (IV) of 0.72 to 1.13, as another way of expression of molecular weight. In addition to molecular weight, other critical properties of PVC resins for achieving good quality of LVT products including the maximum volatile content is no more than 1% , bulk density (gram/cm3) in the range of 0.47 to 0.57, and porosity (gram/cm³) from 0.19 to 0.48. Good balance of porosity, bulk density and molecular weight are important for a wide range of processing ability and formulation flexibility as well as good physical & mechanical properties of plasticized products. In another embodiment, vinyl co-polymers such as vinyl acetate, vinyl alcohol, vinyl acetals, vinyl ethers, chlorinated polyethylene or vinylidene chloride may be used.

In another exemplary embodiment, the polymer is a nonhalogen-containing polymer, such as polymethacrylate. Polymethacrylate is made from the monomer alkyl methacrylate, having the formula CH₂=C(CH₃) COOR, where R can be a lower alkyl group of 1 to 10 carbon atoms or a lower alkenyl group of 2-10 carbon atoms. In an exemplary embodiment, other nonhalogen-containing polymers may be used, including but not limited to lower alkyl acrylicates, acrylic and methacrylic acids, lower alkyl olefins, vinyl aromatics such as styrene and styrene derivatives, or vinyl esters can be used. In other exemplary embodiments, co-polymers such as acrylonitrile, 2-hexyl acrylate, and vinylidene chloride may be used.

In an exemplary embodiment, the bio-based plasticizer has at least 80% bio-based content as defined by the ASTM-D6866 standard. In another exemplary embodiment, the bio-based plasticizer has at least 90% bio-based content as defined by the ASTM-D6866 standard. In further embodiments, the bio-based plasticizer has at least 94% bio-based content as defined by the ASTM-D6866 standard.

The bio-based plasticizer is compatible with the halogen-containing polymers and the non-halogen containing polymers. An exemplary bio-based plasticizer is Chloro-methoxy fat diethylene glycol dinitrate ("N1"), which has the molecular formula C₂₀H₃₇Cl₃O₃. This exemplary bio-based plasticizer is derived from natural oils via a fermentation process to produce fatty acids that undergo a lipid exchange reaction with an alcohol, followed by chlorination to form a high molecular weight, ester structure. The natural oils include many kinds of vegetable oils such as soybean oil, canola oil, camellia oil, rapeseed oil, peanut oil, cotton- seed oil, tung oil, palm oil. All these oils can be in the form of crude type, refined type, waste vegetable oil type, etc. The bio-based plasticizer imparts a plasticized effect similar to that of traditional phthalate ester plasticizers such as diisononyl phthalate ("DINP"), as well as offering flammability resistance through the presence of the chloro-group.

In an exemplary embodiment, the bio-based plasticizer is 1-40 phr. In another exemplary embodiment, the bio-based plasticizer is 10-40 phr. In yet another embodiment, the bio-based plasticizer is 25-40 phr. In another embodiment, the bio-based plasticizer is 10-35 phr. In yet another embodiment, the bio-based plasticizer is 20-35 phr. In another embodiment, the bio-based plasticizer is 25-35 phr.

Halogen-containing polymers such as polyvinyl chloride are thermally unstable. During processing, PVC is heated to 150-215°C to allow for molding or extrusion. The elevated temperature results in the elimination of hydrochloric acid, forming a polyene sequence along the polymer chain, and rapid discoloration of the PVC material as it chemically degrades. Similarly, non-halogen containing polymers such as polymethacrylate undergo decarboxylation at the processing temperatures necessary for molding or extrusion.

The surface covering composition may include a heat stabilizer to retard degradation of the polymer during processing. The heat stabilizer provides chemical stability to polymers such as PVC by neutralizing the generated hydrochloric acid before the polymer is degraded. Examples of heat stabilizers include organocalcium, organozinc, organotin, organobarium, or combinations thereof, such as organocalcium/organozinc or organobarium/organozinc. In an embodiment, the heat stabilizer is present in 1-5 phr. In another embodiment, the heat stabilizer is present in 1-3 phr. In yet another embodiment, the heat stabilizer is present in 1-2 phr.

The surface covering composition may include a co-stabilizer to provide additional stability and protection against polymer degradation during heating and processing. The co-stabilizer maybe an epoxidized vegetable oil such as expoxidized soybean oil, epoxidized linseed oil, epoxidized canola oil, epoxidized corn oil, epoxidized sunflower oil, epoxidized tung oil, epoxidized tall oil, epoxidized safflower oil, or combinations thereof.

In an exemplary embodiment, the co-stabilizer is 1-10 phr. In another exemplary embodiment, the co-stabilizer is 1-8 phr. In an another exemplary embodiment, the co-stabilizer is 1.5-7 phr. In yet another exemplary embodiment, the co-stabilizer is 2-5 phr.

The surface covering composition may include a lubricant to reduce the friction between the polymer and heated surfaces of machinery, and between the polymer strands during processing. The lubricant may include paraffin wax, petroleum waxes, metal stearates such as calcium stearate, silicone oil, mineral oil, synthetic oils, calcium acid, stearic acid, or a combination thereof.

When present, the lubricant is 0.5-3 phr. In another embodiment, the lubricant may be 1-2.5 phr. In yet another embodiment, the lubricant may be 1.5-2 phr.
The surface covering composition may include an incorporated filler and reinforcements to reduce cost, increase the output of dry blending, improve dimensional stability, stiffness, temperature resistance, and environmental durability. As for reinforcements, glass fiber scrims and veils may be used for expansion and contraction control. Wood fillers, such as cork granulates may be used for sound improvement, comfort, thermal insulation, stiffness, profiling ability, etc. In addition, magnesium hydroxide, aluminum trihydrate may be used as a flame retardant, as well as smoke suppressor, etc. Other fillers may used, including calcium carbonate (CaCO₃), calcium-magnesium carbonate, Talc, Mica, Wollastonite, Feldspar, Coal ash, silicate, calcium sulfate, ceramic/glass microsphere, Kaolin, such as alumino-silicates, silica, dolomite, calcined clay, or bauxite, or a combination thereof. CaCO₃ fillers may contain some magnesium carbonate, and impurities such as silica and hard silicates etc. The characteristics of dry-ground CaCO₃ used, for example, may be (1) mean particle size from 2-3 microns and residue at 150-200 mesh ≤ 0.5 ; (2) oil absorption: from 8 - 20 g/100g; (3) brightness: 90 (minimum); purity ≥ 98; heavy metal content: not detectable.

When present, the filler is 1- 500 phr. In another embodiment, the filler 10 - 450 phr. In another embodiment, the filler 20- 450 phr. In yet another embodiment, the filler 30-450 phr. In an embodiment, the filler is 100 - 400 phr. In yet another embodiment, the filler is 150 - 400 phr. In another embodiment, the filler is 200 - 400 phr.

In an exemplary embodiment, the surface covering composition may include conventional pigments useful in coatings or plastics, such as carbon black, titanium oxide, iron oxide, chromium oxide, lead chromate, silica, talc, china clay, metallic oxides, silicates, chromates, phthalocyanine blue, phthalocyanine green, carbazole violet, antrhrapyrimidine yeloow, flavanthrone yellow, isoindoline yellow, indanthrone blue, quinacridone violet, perylene reds, diazo red, and other conventionally know pigments.

When present, the total pigment content is 0.5 to 5 phr. More preferably, the total pigment content is 0.5- 2.5 phr.

In an exemplary embodiment, the surface covering may include a clear wear layer for the surface covering composition. The clear wear layer may include PVC, a bio-based plasticizer, a stabilizer, and a co-stabilizer.

An exemplary procedure for manufacturing the clear wear layer according to the invention will be discussed. For instance, the wear layer may be prepared using an extrusion process and a subsequent four roll calendaring process. The wear layer may include a PVC powder, a bio-based plasticizer, a stabilizer, a co-stabilizer, a lubricant, and a light stabilizer or toner as needed per formulation. These components are added together and then mixed uniformly in a low shear mixer. The mixture is then fed to a kneader extruder, which includes a screw conveyor built into the mixing chamber. The screw revolves continuously away from the discharge end and move the material into the reach of the mixing arm, and then extruded out of the mixing chamber to form a rope-like extrudate. The extrudate is then fed into a planetary extruder. The planetary system may consist of one hollow barrel and a main spindle (screw), as well as several satellite screws (spindles), which synchronize harmoniously with each other to enable satisfactory mixing and plastification. The extrudate material is then further processed into a melt through a softer hot melt stage. The melt is then worked through a calender roll mill heated to a similar temperature. The shear mixing action on the surface of the calender rollers fluxes the melt and forms a polymer sheet having a controlled thickness. The thickness of the polymer sheet is controlled by adjusting the distance between the calendar rolls. The sheets are then cooled and collected on a reel or cut into sheets depending upon the equipment and the process of the downstream operation. For the continuous lamination operation, the sheet is produced as a roll form and then cut into a size that fits to the size of the hot press.

In an exemplary embodiment, the surface covering may include a base layer for the surface covering composition. The base layer may include PVC, a bio-based plasticizer, a stabilizer, a co-stabilizer, a lubricant, a filler, and pigment. The typical procedure for manufacturing the base layer is the same as that of the clear wear layer.

For example, a PVC powder, a bio-based plasticizer, a stabilizer, a co-stabilizer, a lubricant, and a pigment are added together and mixed uniformly in a low shear mixer. This pre-mix is then fed into kneader extruder and limestone is uniformly mixed in. The mixed compound is then fed into banbury mixer that includes two mixing rotors mounted for rotation in a mixing chamber, as well as a ram mounted for sliding the mixed compound through a passage opening into the mixing chamber. The mixed material is then discharged when target temperatures over time are achieved. At this stage, the discharged material is at a temperature of 150-215°C in a hot melt form. The melt is then worked through a calender roll mill and heated to a similar temperature. The shear mixing action on the surface of the calender rollers fluxes the melt and forms a polymer sheet having a controlled thickness. The thickness of the polymer sheet is controlled by adjusting the distance between the calendar rolls. The sheets are then cooled and collected on a reel or cut into sheets.

A typical procedure for the manufacture of an LVT involves laminating a clear wear layer on one or more base layers. The laminate is compressed under heat and pressure with an embossing plate having a desired texture that typically mimics natural wood, ceramic, stone, slate, or brick designs.

In an exemplary embodiment, the LVT may be prepared by laminating together the following sequence:
(1) a backing cloth layer;
(2) one or more bottom base layers;
(3) an optional fiberglass scrim layer;
(4) one or more upper base layers;
(5) a print film having the desired pigment composition; and
(6) a clear wear layer.

An embossing plate is placed on top of the above assembled stack. The stack is then heated to approximately 130°C-150° C and approximately 3-5 MPa of pressure is applied through the embossing plate for about 20 - 30 minutes. The press is then cooled to 30° - 50°C and the LVT is removed.

Furthermore, the laminated sheet is cooled down for few hours and then a Ultroviolet curable coating system is applied on a surface of product. The coating material is typically formulated with urethane acrylates oligomer with functional monomer and photo initiator and others that under appropriate UV energy to cure the coating and form a hard three dimensional crosslink surface. The UV coating provides a excellent surface properties for the flooring such as stain and chemical resistance, appearance & gloss retention, scratch and abrasive resistance etc.

After coating, the product is further processed through annealing in order to release the internal stress from the previous processes. Without proper annealing, the dimensional stability of the product may be compromised. Further processes may follow annealing, such as acclamation, punching, profiling to form tongue and groove locking profile, and inspection before packaging into cartons, among others well know in the industry.

Embodiments of the layer compositions will now described through the following examples.

### EXAMPLE I

Example I an exemplary embodiment of a LVT according to the invention having a clear wear layer.

Table 1 discloses an example of a clear wear layer composition:

**TABLE 1**

| **Ingredients** | **Formule (phr)** |
|---|---|
| PVC | 100 |
| Bio-based Plasticizer | 25-35 |
| Calcium Stablizer | 1.2-2 |
| Epoxide Soybean Oil | 2-5 |

### EXAMPLE II

Example II discloses another exemplary embodiment of a LVT according to the invention having a lower base layer composition and an upper base layer.

Table 2 discloses an example of a lower base layer composition and an upper base layer composition.

**TABLE 2**

| **Ingredients** | **Formula (phr)** | |
|---|---|---|
| | **Lower Base Layer** | **Upper Base Layer** |
| PVC | 100 | 100 |
| Zinc Stabilizer | 1.5-2.0 | 1.5-2.0 |
| Calcium Stearate | 1.0-1.5 | 1.0-1.5 |
| Epoxidized Soybean Oil | 3-5 | 3-5 |
| Bio-based Plasticizer | 25-40 | 25-40 |
| Limestone | 200-300 | 320-400 |
| Carbon Black | 0.3-0.5 | 0.5 |
| Filler Content/% | 57-67 | 70-78 |

### EXAMPLE III

Example III: discloses an exemplary embodiment of a LVT according to the invention. In particular, this embodiment includes PVC, cork granulates, and a bio-based plasticizer, such that the cork granulates are disposed in a base layer thereof. •

Furthermore, a compatibilizer is used to promote a dispersion of cork in the PVC compound matrix to generate a homogeneous composition that results in better physical and mechanical properties. The compatibilizer may be maleic anhydride(MA) grafts polymer, for instance. Also, a tackifier may be used to improve the cohesion of the compound and processing ability. The tackifier may be a rosin resin, for instance, or derivatives such as rosin ester.

An exemplary construction of the LVT may include a UV top coat of 3 mils-0.5 mils, a clear wear layer of 0.1-1.0 mm, a first base layer of 1.0-2.0 mm, a second base layer of 1.0-2.0 mm, a third base layer of 1.0-2.0 mm, and a non-slip bottom layer of 0.2-.5 mm

Table 3 discloses composition of an LVT according to the invention having PVC, cork granulates, and a bio-based plasticizer.

**TABLE 3.**

| **Ingredient** | **Formula (phr)** | | |
|---|---|---|---|
| | **First Base Layer** | **Second Base Layer** | **Third Based Layer** |
| **PVC** | 100 | 100 | 100 |
| Calcium/zinc stabilizer | 1-5 | 1-5 | 1-5 |
| Epoxidized soybean oil | 5-10 | 5-10 | 5-10 |
| Tackifier | 1.0-3.0 | 0.5-1.0 | 0.5-1.0 |
| Compatibilizer | 1-5 | 1-5 | 1-5 |
| Bio-based Plasticizer | 20-40 | 25-45 | 30-50 |
| Cork Granules | 35-70 | 35-70 | 35-70 |
| Limestone | 100-200 | 100-200 | 100-200 |
| Pigment | 0.5-2.0 | 0.5-2.0 | 0.5-2.0 |

### EXAMPLE IV

Example IV discloses another exemplary embodiment of a LVT according to the invention having a bio-based plasticizer.

Table 4 discloses the properties of the bio-based plasticizer compared to diisononyl phthalate ester (DINP).

**TABLE 4.**

| **Formula** | **1** | **2** | | |
|---|---|---|---|---|
| **Plasticizer** | **Bio-based Plasticizer** | **DINP** | **Industrial Specification** | |
| **Thickness** | 0.5 | 0.49 | 0.301-0.500 | 0.501-1.0 |
| **Clarity** | 82.6 | 84.4 | 80±20 | |
| **Tensile** | 43.18 | 32.11 | ≥7 | ≥9 |
| **Strength** | 36.5 | 32.14 | ≥7 | ≥9 |
| **Elongation** | 322% | 286% | ≥200 | ≥210 |
| **% Shrinkage¹** | 1.47% | 1.07% | ≥2% | ≥2% |

| | | | | |
|---|---|---|---|---|
| ¹100°C, 30 minutes | | | | |

The foregoing illustrates some of the possibilities for practicing the invention. Many other embodiments and fields of use for an LVT to the invention are possible and within the scope and spirit of the invention. It is, therefore, intended that the foregoing description be regarded as illustrative rather than limiting, and that the scope of the invention is given by the appended claims together with their full range of equivalents.

**The invention is also defined by the following embodiments:**
1. A surface covering composition comprising:
   a polymer;
   a bio-based plasticizer;
   a stabilizer; and
   a co-stabilizer.
2. The surface covering composition of embodiment 1, wherein the polymer is polyvinyl chloride, polyvinylidene chloride or alkyl methacrylate.
3. The surface covering composition of embodiment 1, wherein the polymer is polyvinyl chloride.
4. The surface covering composition of embodiment 1, wherein the bio-based plasticizer is at least 90% bio-based content as defined by an ASTM-D6866 standard.
5. The surface covering composition of embodiment 1, wherein the bio-based plasticizer is 25-40 parts per 100 parts of the polymer.
6. The surface covering composition of embodiment 1, wherein the bio-based plasticizer is chloro-methoxy fat diethylene glycol dinitrate.
7. The surface covering composition of 1, wherein the stabilizer is 1-2 parts per 100 parts of the polymer.
8. The surface covering composition of embodiment 1, wherein the stabilizer is organocalcium, organozinc, organotin, organobarium or a combination thereof.
9. The surface covering composition of 1, wherein the co-stabilizer is 1.5-7 parts per 100 parts of the polymer.
10. The surface covering composition of embodiment 1, wherein the co-stabilizer is an epoxidized polyglyceride.
11. The surface covering composition of embodiment 10, wherein the epoxidized polyglyceride is expoxidized soybean oil or epoxidized linseed oil.
12. The surface covering composition of embodiment 1, further comprising a lubricant.
13. The surface covering composition of 12, wherein the lubricant is paraffin wax, calcium stearate, calcium acid, or a combination thereof.
14. The surface covering composition of embodiment 1, further comprising a filler.
15. The surface covering composition of embodiment 14, wherein the filler comprises calcium carbonate, talc, mica, fibers, silica, wollastonite, or a combination thereof.
16. The surface covering composition of 1, further comprising a pigment.
17. The surface covering composition of embodiment 16, wherein the pigment includes carbon black, titanium oxide, iron oxide, chromium oxide, lead chromate, silica, talc, china clay, metallic oxides, silicates, chromates, phthalocyanine blue, phthalocyanine green, carbazole violet, antrhrapyrimidine yeloow, flavanthrone yellow, isoindoline yellow, indanthrone blue, quinacridone violet, perylene reds, or diazo red, or combinations thereof.
18. A surface covering composition comprising:
   a polymer;
   a bio-based plasticizer;
   a stabilizer; and
   a co-stabilizer;
   the composition having a total bio-based content of 1-35% as defined by an ASTM-D6866 standard.
19. The surface covering composition of embodiment 18, wherein the total bio-based content is 15-35% as defined by the ASTM-D6866 standard.
20. The surface covering composition of embodiment 18, wherein the total bio-based content is 20-30% as defined by the ASTM-D6866 standard.
21. The surface covering composition of embodiment 18, wherein the bio-based plasticizer is at least 90% bio-based content as defined by the ASTM-D6866 standard.
   embodiment
22. The surface covering composition of 18, wherein the polymer is polyvinyl chloride, polyvinylidene chloride or alkyl methacrylate.
   embodiment
23. The surface covering composition of 22, wherein the polymer is polyvinyl chloride.
24. The surface covering composition of embodiment 18, wherein the bio-based plasticizer is at least 90% bio-based content as defined by the ASTM-D6866 standard.
25. The surface covering composition of embodiment 18, wherein the bio-based plasticizer is 25-40 parts per 100 parts of the polymer.
26. The surface covering composition of embodiment 18, wherein the bio-based plasticizer is chloro-methoxy fat diethylene glycol dinitrate.
27. The surface covering composition of embodiment 18, wherein the stabilizer is 1-2 parts per 100 parts of the polymer.
28. The surface covering composition of 18, wherein the stabilizer is organocalcium, organozinc, organotin, organobarium or a combination thereof.
29. The surface covering composition of embodiment 18, wherein the co-stabilizer is 1.5-7 parts per 100 parts of the polymer.
30. The surface covering composition of embodiment 18, wherein the co-stabilizer is an epoxidized polyglyceride.
31. The surface covering composition of 30, wherein the epoxidized polyglyceride is expoxidized soybean oil, epoxidized linseed oil, or a combination thereof.
32. A surface covering comprising:
   a polymer; and
   a bio-based plasticizer being 25-40 parts per 100 parts of the polymer.
33. The surface covering of embodiment 32, further comprising a stabilizer being 1-2 parts per 100 parts of the polymer.
34. The surface covering of embodiment 33, wherein the stabilizer is organocalcium, organozinc, organotin, organobarium or a combination thereof.
35. The surface covering of embodiment 33, further comprising a co-stabilizer being 1.5-7 parts per 100 parts of the polymer.
36. The surface covering of embodiment 35, wherein the co-stabilizer is an epoxidized polyglyceride.
37. The surface covering of embodiment 36, wherein the epoxidized polyglyceride is expoxidized soybean oil or epoxidized linseed oil.
38. A surface covering comprising:
   a layer of polymer having a bio-based plasticizer and cork.
39. The surface covering of embodiment 40, wherein the cork is granulated cork homogenously dispersed throughout the layer of the polymer.
40. The surface covering surface covering of embodiment 39, wherein the cork is 35-70 parts per 100 parts of polymer in the layer of polymer.
41. The surface covering of 40, wherein the bio-based plasticizer is 20-40 parts per 100 parts of polymer in the layer of polymer.
42. The surface covering of embodiment 41, further comprising a second layer of polymer having a second bio-based plasticizer.
43. The surface covering of embodiment 42, wherein the second bio-based plasticizer is 25-45 parts per 100 parts of polymer in the second layer of polymer.
44. The surface covering of embodiment 42, wherein the second bio-based plasticizer is the same as the bio-based plasticizer.
45. The surface covering of embodiment 42, wherein the second layer of polymer further includes a second cork.
46. The surface covering of embodiment 45, wherein the second cork is 35-70 parts per 100 parts of polymer in the second layer of polymer.
47. The surface covering of embodiment 45, wherein the second cork is the same as the cork.
48. The surface covering of embodiment 42, further comprising a third layer of polymer having a third bio-based plasticizer.
49. The surface covering of embodiment 48, wherein the third bio-based plasticizer is 30-50 parts per 100 parts of polymer in the third layer of polymer.
50. The surface covering of embodiment 48, wherein the third bio-based plasticizer is the same as the second bio-based plasticizer.
51. The surface covering of 48, wherein the third layer of polymer further includes a third cork.
52. The surface covering of embodiment 51, wherein the third cork is 35-70 parts per 100 parts of polymer in the third layer of polymer.
53. The surface covering of embodiment 51, wherein the third cork is the same as the second cork.
54. The surface covering of embodiment 40, wherein the bio-based plasticizer is 25-45 parts per 100 parts of polymer in the layer of polymer.
55. The surface covering of 40, wherein the bio-based plasticizer is 30-50 parts per 100 parts of polymer in the layer of polymer.

## Claims

1. A surface covering comprising:
a vinyl composition flooring tile having a layer combining:
a polymer selected from the group consisting of polyvinyl chloride, polyvinylidene chloride, or polymethacrylate;
a non-phthalate bio-based plasticizer of chloro-methoxy fat diethylene glycol dinitrate;
a stabilizer of organocalcium, organozinc, organotin, organobarium, or a combination thereof; and
a co-stabilizer of epoxidized polyglyceride selected from the group consisting of epoxidized soybean oil, epoxidized linseed oil, or combinations thereof.

2. The surface covering of claim 1, wherein the polymer is polyvinyl chloride.

3. The surface covering of claim 2, wherein the bio-based plasticizer is at least 90% bio-based content as defined by an ASTM-D6866 standard.

4. The surface covering of claim 3, wherein the stabilizer is 1-2 parts per 100 parts of the polymer.

5. The surface covering of claim 4, further comprising a lubricant.

6. The surface covering of claim 5, wherein the lubricant is paraffin wax, calcium stearate, or a combination thereof.

7. The surface covering of claim 6, further comprising a filler.

8. The surface covering of claim 7, wherein the filler comprises calcium carbonate, talc, mica, fibers, silica, wollastonite, or a combination thereof.

9. The surface covering of claim 8, further comprising a pigment.

10. The surface covering of claim 9, wherein the pigment includes carbon black, titanium oxide, iron oxide, chromium oxide, lead chromate, silica, talc, china clay, metallic oxides, silicates, chromates, phthalocyanine blue, phthalocyanine green, carbazole violet, anthrapyrimidine yellow, flavanthrone yellow, isoindoline yellow, indanthrone blue, quinacridone violet, perylene reds, or diazo red, or combinations thereof.

11. The surface covering of claim 10, further comprising granulated cork homogenously dispersed throughout the layer.

12. The surface covering surface covering of claim 11, wherein the cork is 35-70 parts per 100 parts of polymer in the layer.

13. The surface covering of claim 12, wherein the bio-based plasticizer is 20-40 parts per 100 parts of polymer in the layer.

14. The surface covering of claim 11, further comprising a second layer having a second bio-based plasticizer.

15. The surface covering of claim 14, wherein the second bio-based plasticizer is 25-45 parts per 100 parts of polymer in the second layer.

16. The surface covering of claim 15, wherein the second bio-based plasticizer is the same as the bio-based plasticizer.

17. The surface covering of claim 16, wherein the second layer further includes a second cork.

18. The surface covering of claim 17, wherein the second cork is 35-70 parts per 100 parts of polymer in the second layer.

19. The surface covering of claim 18, wherein the second cork is the same as the cork.

20. The surface covering of claim 1, wherein the bio-based plasticizer is derived from natural oils using a fermentation process, wherein the fermentation process produces fatty acids that undergo a lipid exchange reaction with an alcohol, and wherein the fatty acids further undergo chlorination to form a high molecular weight ester structure.

21. The surface covering of claim 20, wherein the fermentation process produces fatty acids that undergo: (1) a lipid exchange reaction with an alcohol and (2) chlorination to form a high molecular weight ester structure.
